(19) Europäisches Patentamt
European Patent Office
Office européen des brevets

(11) Publication number: **0 381 656**
**A1**

# (12) EUROPEAN PATENT APPLICATION

(21) Application number: **90850042.4**

(51) Int. Cl.5: **C09K 5/00**

(22) Date of filing: **31.01.90**

(30) Priority: **31.01.89 US 304516**

(43) Date of publication of application:
**08.08.90 Bulletin 90/32**

(84) Designated Contracting States:
**BE CH DE FR GB LI NL SE**

(71) Applicant: **FIRST BRANDS CORPORATION**
**83 Wooster Heights Road**
**Danbury, Connecticut 06813(US)**

(72) Inventor: **Goddard, Errol D.**
**349 Pleasant Lane**
**Haworth, New Jersey 07941(US)**
Inventor: **Leung, Pak Sang**
**15 Woodland Road, Highland Mills**
**New York 10930(US)**

(74) Representative: **Halldin, Bo et al**
**Dr. Ludwig Brann Patentbyra AB Kungsgatan**
**3 P.O. Box 7524**
**S-103 92 Stockholm(SE)**

(54) **Alcohol-soluble/water-insoluble oil-containing antifreeze.**

(57) Antifreeze concentrate and working antifreeze composition are disclosed which comprise an alcohol, such as, for example ethylene glycol, a surface modifier, such as, for example, an organophosphate which adheres to the interior metal surfaces of an automotive cooling system, and a alcohol-soluble/water-insoluble oil soluble in the alcohol but substantially insoluble in an aqueous solution of the alcohol, which forms a film on the surface-modified, interior metal surfaces of the automotive cooling system.

EP 0 381 656 A1

# ALCOHOL-SOLUBLE/WATER-INSOLUBLE OIL-CONTAINING ANTIFREEZE

## FIELD OF THE INVENTION

The present invention relates generally to heat transfer fluids and, more specifically, to an antifreeze concentrate characterized as containing an alcohol-soluble/water-insoluble oil component wherein the oil component is soluble in alcohol and is substantially insoluble in alcohol/water mixtures.

## BACKGROUND OF THE INVENTION

Conventional alcohol-based heat transfer fluids, such as automobile antifreezes, have the tendency to corrode the various metal surfaces of the heat transfer or cooling system. A variety of metal surfaces are often involved including, for example, aluminum, copper, iron, brass, and lead solder. Aluminum corrosion can cause special problems in automobile coolant systems, since aluminum corrosion that occurs can not only damage the aluminum metal surface being attacked by corrosion, but may also adversely affect other parts of the coolant system due to a phenomenon called "transport deposition". By virtue of transport deposition, soluble aluminum corrosion products formed at engine surfaces may be carried to, and precipitated on, the cooler radiator tubes, where they form heat-insulating fins or coatings that impair heat transfer.

The general problems associated with metal corrosion by alcohol based heat transfer fluids have been addressed by the industry over the years. The corrosion that occurs in such a system is considered to be extremely complex and the innumerable solutions proposed over the years serve to underscore the complexities of the system.

In addition to providing various approaches to solving the problems involved, the numerous prior patents and publications in this field reflect proposals for a seemingly endless list of organic and inorganic compounds as potential corrosion inhibitors. Thus, for example, various inorganic phosphates, silicates, phosphonates, borates, azoles, siliconates, nitrates, nitrites, and the like have been proposed in a wide variety of compositions.

What is considered to be the state-of-the-art technology for inhibiting corrosion in automotive cooling systems containing an alcohol based heat transfer fluid is based upon what has been termed "silicone-silicate" chemistry. This emanates from the technology disclosed in United States Patents 3,337,496 and 3,341,469. Numerous variations utilizing this basic technology have been utilized over the years. This type of corrosion inhibiting system has generally been perceived by the industry to be effective and is considered as effective in providing a highly desirable antifreeze, i.e., heat transfer compositions.

Although the silicon-silicate systems are desirable, there are several factors which have made the industry receptive to a new type of corrosion inhibiting system. First of all, the underlying chemistry in this silicone-silicate system is extremely complex, and is not that well understood and, therefore not fully capable of control. Such silicone-silicate systems, when not carefully controlled, can result in polymerization of the silicate which leads to the formation of gels in the cooling system. This formation of gels depletes active silicate from the antifreeze, thereby decreasing corrosion protection for the cooling system's metal surfaces. Furthermore, modifications to such automotive cooling systems continue to occur, fostered by the changing state-of-the-art in metallurgy. These changes in-the metal types and/or relative amounts of a given metal, have substantially increased usage of aluminum for various parts of the cooling system. Nevertheless, these systems often also include conventional metal components, including ferrous components; and therefore, the corrosion inhibitor system must provide adequate corrosion protection for all types of automotive cooling system metals.

In addition, many automobiles are being manufactured with smaller, harder working engines having higher operating engine temperatures. Since metal corrosion activity increases at higher engine temperatures, the need for greater protection against corrosion also increases under these more severe operating engine temperatures.

All of these factors have created the desire to utilize an antifreeze based on more effective and more easily controlled corrosion- inhibitor systems. There is a continuing need for antifreezes and antifreeze concentrates (diluted with water) that are physically stable prior to use, thereby facilitating ease of handling and not requiring special mixing by the customer or user, yet which provide adequate corrosion protection for the metallurgy being employed in the construction of automotive cooling systems.

Among the many compounds recommended as corrosion inhibitors, certain organophosphate esters

have been disclosed for use as lubricants and corrosion inhibitors. For example, ethylene oxide-containing organophosphates and propylene oxide-containing organophosphates and a method of preparing them are disclosed in U.S. Patent 4,360,474. Further, German patent application 2,756,747 discloses PO/EO and PO/BO-containing phosphate esters (wherein "EO" denotes ethylene oxide, "PO" denotes propylene oxide, and "BO" denotes butylene oxide) useful as lubricants and corrosion inhibitors. The compounds of this publication are made by reacting polyphosphoric acid with aliphatic diols, triols, or tetraols. The organophosphates of the German application have molecular weights between 200 and 8,000. This German application is primarily directed to low-foaming metalworking lubricating fluids and does not disclose antifreeze formulations. Further, United Kingdom Patent 962351 discloses a uniphase fluid comprising between 80% and 95% by volume of a glycol, not more than 20% by volume of a rolling oil and not more than 15% by volume of a non ionic surface active agent. Rolling oils which are water soluble are preferred and various surface active agents are disclosed, including carboxylate.

European patent application publication No. 59,461 discloses hydraulic fluids containing polyoxyethylene phosphate esters and salts thereof together with a nonionic oxyalkylene block copolymer, said copolymer having a molecular weight from about 950 to about 3500 and having a polyoxypropylene content of 65 to 100 wt. percent based on the weight of the copolymer.

Oil-in-alcohol antifreeze compositions have been disclosed in U.S. Patent Nos. 4,610,222 and 4,704,220. U.S. Patent No. 4,610,222 discloses a method for cooling an internal combustion engine with an oil-in-alcohol containing consolute antifreeze composition having a cloud point of at least about 40° C. The method involves raising the temperature of the antifreeze to the cloud point thereby causing the oil in the consolute antifreeze to separate and coat the metal surfaces of the cooling system. U.S. Patent No. 4,704,220 discloses an oil-in-alcohol microemulsion-containing antifreeze compositon concentrate comprising an alcohol, alcohol-insoluble oil particles (having a particle size less than about 0.1 micron) forming a discontinuous phase in the composition, at least one hydrophobizing compound and at least one emulsifier. In addition, in applicants' copending U.S. Serial No. 073,354, filed July 10, 1987 an antifreeze concentrate is claimed comprising an alcohol, at least one oxyalkylene compound (selected from a class of oxyalkylene compounds) and at least one surface modifier compound. The oxyalkylene compound is characterized as being soluble at ambient temperature in the alcohol selected for use in the antifreeze concentrate. Further, the preferred oxyalkylene compounds are selected to provide an antifreeze concentrate which upon dilution to a working antifreeze has a cloud point between about 40° C and about 125° C.

## SUMMARY OF THE INVENTION

The present invention provides an antifreeze concentrate that is physically stable prior to use, existing as a single phase, which upon admixture with water results in the formation of distinct phases as a result of the substantial insolubility of an oil in the aqueous antifreeze mixture. Further, the instant invention relates to a stable, clear antifreeze that does not necessarily require the use of silicone-silicate constituents and provides satisfactory protection against aluminum corrosion at both room and the higher operating temperatures of an automotive cooling system.

In one aspect, the present invention relates to an antifreeze composition concentrate for vehicular cooling systems having internal metal surfaces comprising:

(a) alcohol:

(b) at least one alcohol-soluble/water-insoluble oil characterized as having a solubility of at least about 0.4 weight percent in the alcohol at 25° C at 1 atm pressure and a solubility of less than about 0.25 weight percent in a mixture of 50 wt. percent water and 50 wt. percent alcohol at 25° C and at 1 atm pressure: and

(c) at least one surface modifier compound selected from the group consisting of organic derivatives of the following: phosphate, sulfate, phosphonate, sulfonate, carboxylate, organoammonium and phosphonium salts, amine oxides, phosphine oxides, amphoteric and zwitterionic groups such as betaines and sulfobetaines and mixtures thereof; wherein the organic group is selected from the class consisting of the following radicals: alkyl, alkenyl, alkynyl, aryl, alkylaryl, arylalkyl, alkyleneoxy, polyalkyleneoxy, and combinations thereof, present in an amount sufficient to provide surface modification of the metal surfaces and to allow said alcohol-soluble/water-insoluble oil to form a film on the surface-modified metal surfaces.

In another aspect, the present invention relates to the antifreeze composition produced by diluting the above concentrate with water and/or an alcohol/water mixture. In another aspect, the present invention relates to a method of using the antifreeze composition formed by admixture of the antifreeze composition concentrate with water.

## DESCRIPTION OF THE FIGURE

The Figure depicts the measured contact angles for a polypropylene glycol oil for seven metals having been pretreated with four different antifreeze compositions.

## DETAILED DESCRIPTION OF THE INVENTION

The instant invention relates to antifreeze composition formed as a concentrate comprising an alcohol, a alcohol-soluble/water-insoluble oil characterized as being soluble in the selected alcohol and having a significantly lesser solubility ("practically insoluble") in a mixture of the selected alcohol and water. The term "practically insoluble" is used to mean the amount of oil present in the aqueous mixture formed by admixture of the antifreeze concentrate with water exceeds the ordinary solubility limit of the oil in the continuous phase of the mixture at ambient temperature. It is believed to be beneficial to utilize an oil which is completely insoluble in the water diluted alcohol medium.

The "alcohol-soluble/water-insoluble oil" (component (b)) is preferably characterized as having a minimum solubility in the selected alcohol of at least about 0.4 wt. % at 25 °C at 1 atm pressure, preferably greater than 1.0 wt, % at 25 °C at 1 atm pressure. The "alcohol-soluble/water-insoluble oil" component is further characterized as being practically insoluble in a 50/50 (weight basis) mixture of the alcohol and water such that the alcohol-soluble/water-insoluble oil has a solubility in the alcohol/water mixture of less than about 0.25 wt. % at 25 °C and a pressure of 1 atm, preferably less than about 0.05 at 25 °C and a pressure of 1 atm. The solubility of the alcohol-soluble/water-insoluble oil in the alcohol or alcohol/water may be determined by equilibrating a concentration sequence of the oil in the alcohol under stirred conditions. After saturation for 2 hours at the specified temperature, any excess over saturation is estimated from the appearance of the solution. Insolubility is easily detected by visual observation. Formation of two distinctive phases or a turbid suspension indicates substantial insolubility. Turbidity and transmittance can be used to objectively determine if any insoluble material is present as a suspension. For example, when ethylene glycol (EG) or 1/1 mixture of EG/water are used for calibration, they both have a turbidity of 0.7 NTU (Nephelometric Turbidity Unit as measured with the HACH model 2100A turbidimeter) and 100% transmittance (or absorbance = 0) measured with filtered light with 470nm wavelength using a Brinkmann PC/600 spectrophotometer. When hexanol was added below the solubility limit (e.g., 5% in EG and 0.2% in 1/1 EG/water), the turbidity and transmittance stayed essentially the same as that of the solvent. When 0.6% hexanol was added to the 1/1 EG/water solution, the turbidity doubled to 1.9 NTU and the transmittance decreased to 98% (absorbance of 0.01). When 1% hexanol was added to 1/1 EG/water, the turbidity increased to 3 NTU and the transmittance decreased to 93% (absorbance of 0.03). Although, selection of an exact turbidity (or transmittance) value to indicate insolubility is somewhat arbitrary, in general, a 100% increase in turbidity value indicates the limit of solubility of the oil in the alcohol has been exceeded.

Representative alcohol-soluble/water-insoluble oil components which demonstrate the above-described solubility criteria include, but are not limited to n-hexanol, n-octanol, n-decyl alcohol, n-dodecyl alcohol, toluene, n-heptane, 2-octanone, 2-methyl cyclohexanone, 2-t-butyl cyclohexanol, 4-t-butyl cyclohexanol, 2-methyl cyclohexanol, 4-methyl cyclohexanol, o-methyl benzyl alcohol, p-methyl benzyl alcohol, p-ethyl benzyl alcohol, p-t-butyl benzyl alcohol, m-chlorobenzyl alcohol, m-chloroacetophenone, 2-chloracyclohexanol, 2-chloro-2-butanone and mixtures thereof. In addition, the glycol-soluble/water-insoluble oil component will generally be a liquid over the normal working temperature range of the working antifreeze and will, within the aforementioned temperature range, be a liquid over the normal storage temperature range of the antifreeze concentrate and over the normal temperature range for a working antifreeze in an automotive cooling system.

The useful "surface modifiers", in general, function to attach or anchor itself to the metal surface and to provide an affinity with the alcohol-soluble/water-insoluble oil so that a uniform film of the alcohol-soluble/water-insoluble oil on the surface-modified metal surfaces will be provided. The alcohol-soluble/water insoluble oil film will serve to protect the coated metal surfaces against corrosion.

One end of the surface modifier molecule must have the capability of attaching or anchoring the compound to the metal surfaces in the automotive cooling system. To provide long-term effectiveness. the moiety selected should possess thermal, hydrolytic and chemical stability in the cooling system environment, viz. - should not be easily stripped from the metal surface.

The other end of the surface modifier molecule serves to provide affinity between the alcohol-soluble/water-insoluble oil and the coated metal surface to provide the requisite oil film that imparts the corrosion inhibition characteristic of the antifreeze composition concentrates of this invention. This end of the surface modifier molecule, typically an organic moiety, should have the capability of being preferentially

"wetted" by the alcohol-soluble/water-insoluble oil rather than by the continuous alcohol-water system of the working antifreeze composition. If this were not the case, formation of the desired uniform alcohol-soluble/water-insoluble oil film would be impaired. The adequacy of the surface modifier in this respect can thus be readily determined by conventional wetting angle measurements and various corrosion measurement techniques. The measurement of the "wetting" or "contact" angle is well known in the art and can be measured by use of a Goniometer. A decrease in the measured contact angle indicates an improvement in wetting of an oil on a hydrophobized surface, i.e., an oil film, anticipated to be corrosion- inhibiting has formed on the metal surface.

The preferred surface modifier compounds are the organophosphates. The preferred organophosphates useful in the present invention are those made by reacting phosphoric acids with aliphatic mono-ols, diols, triols or tetrols containing PO/EO, PO/BO or PO/BO/EO with a PO content of at least 50 wt. % based on the weight of the PO + BO + EO in the alcohol reactant. Their mode of synthesis is well-known and is described by L. W. Burnette in Nonionic Surfactants, vol 1, p 372-394 (Marcel Dekker, Inc. 1966). As used herein, the term organophosphate is intended to designate any ester of phosphoric or polyphosphoric acid.

Generally, the organophosphates useful in the present invention are identified by the structural formula:

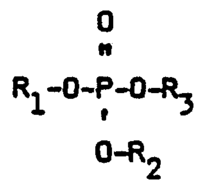

wherein each substituent $R_1$, $R_2$, and $R_3$ is selected from the class consisting of the following radicals: hydrogen; alkyl, aryl, alkenyl and alkynyl, with each of the foregoing having up to about 24 carbon atoms; alkyleneoxy, polyalkyleneoxy; phosphate, polyphosphate and their salts, and combinations thereof; with the proviso that at least one of said substituents is an organic radical listed above or combinations thereof.

The preferred organophosphates have the structural formula identified above wherein at least one R substituent consists of an organic radical containing an alkylene oxide polymer or copolymer $R_4O(PO)_x(EO)_y(BO)_z$-, wherein the alkyleneoxide units may be either random or blocked where $x > y > z$ and $x + y + z \geq$ about 100, and $R_4$ is selected from the class of radicals: hydrogen; alkyl, aryl, alkenyl and alkynyl with the foregoing having up to about 24 carbon atoms; phosphates, polyphosphates and salts thereof, and combinations of the above. These organophosphates preferably have molecular weights below about 10,000 to insure solubility in the antifreeze composition.

Preferred organophosphates are identified by structural formulae I to III, and the free acids and salts thereof, together with mixtures thereof:

(I) 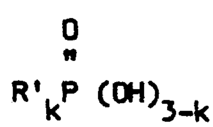

(II) 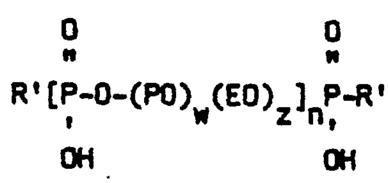

(III) 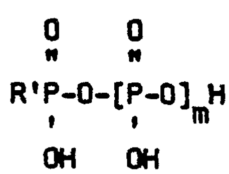

wherein $R' = (RO(PO)_x(EO)_y]$ where R = H or alkyl, aryl, alkylaryl or arylalkyl having up to 24 carbon atoms

PO = Propylene oxide radical
EO = Ethylene oxide radical
x = 1 to 100
y = 0 to 50
k = 1 to 3, with the proviso that when k=3, at least one R′ group is removed from the phosphate ester by hydrolysis prior to or during use
n = 1 to 100
w = 0 to 100, with the proviso that if w ≦ 1, then x can be zero
z = 0 to 50
m = 1 to 10

Within a given formula where x, y, w or z values appear more than once, the values may be the same or different numbers.

Typical useful classes of organophosphates falling within the groups identified by structural formulae I through III above, are identified as follows:

**Example 1:** 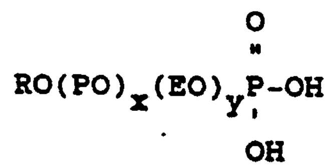

**(Formula I with k = 1)**

**Example 2:** 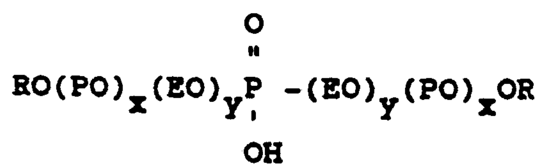

**(Formula I with: k = 2)**

**Example 3:** 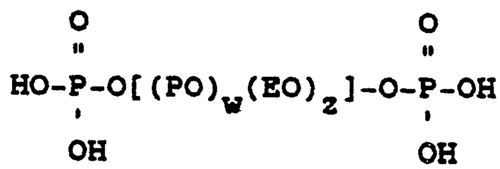

**(Formula II with: n = 1; x = 0; y = 0; and R = H)**

**Example 4:** 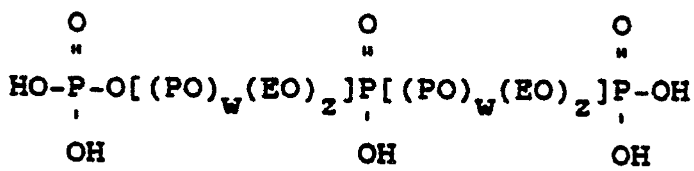

**(Formula II with: n = 2; x = 0; y = 0; and R = H)**

**Example 5:** 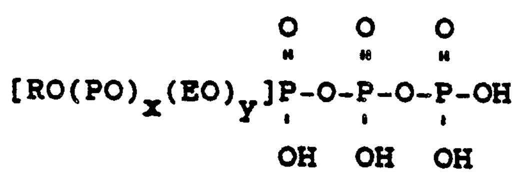

**(Formula III with: m = 2)**

Functionally, the amount of the surface modifier employed should be an amount sufficient to provide surface modification of at least one metal surface of an automotive cooling system contacted, viz.- in the

working antifreeze, to provide at least a mono-molecular coating of surface modifier on the cooling system metal surfaces is provided, which, in turn allows an alcohol-soluble/water-insoluble oil film to be formed thereon. The effective amount of the surface modifier compound can be readily determined based on the surface area of the automotive cooling system to be protected. The specific amount can vary over a wide range, but is typically used in an amount of between 0.001 and about 30 weight percent, preferably between about 0.005 and about 1, and more preferably between about 0.005 and about 0.1, based on the weight of the antifreeze concentrate. Below the 0.001 weight percent, the amount of surface modifier compound is expected to be insufficient to be effective, whereas above about 30 percent the surface modifier is expected to provide no significant further surface modification benefits.

Other surface modifier compounds which are believed useful are organic derivatives of the following groups: sulfate; sulfonate such as barium alkyl benzene sulfonate; a phosponate, such as dodecyl phosphonate; a carboxylate, such as a carboxylic acid grafted on polyalkylene glycol; organoammonium salts, such as cetyltrimethylammonium chloride; amphoteric and zwitterionic groups; as well as the other hydrophobizers described above, should be present in the broad range of amounts described above for the organophosphates.

Many of the surface modifier compounds employed, such as the organophosphates, will provide protection against corrosion of the metal surfaces in and of themselves. When such compounds are employed, the corrosion protection provided by such compounds together with the alcohol-soluble/water-insoluble oil film combine to provide superior corrosion resistance.

The preference for utilizing an alcohol-soluble/water-insoluble oil practically insoluble in an alcohol/water mixture is predicated upon the improved corrosion resistance provided as demonstrated by an aluminum disc test, as described in Example 1 of U.S. Patent No. 4.610,222, incorporated herein by reference. More particularly, the alcohol-soluble/water-insoluble oil that comes out of solution is believed to have greater affinity for the surface-modified metal surfaces of the automotive cooling system than does an oil remaining in solution.

In general, the amount of the alcohol-soluble/water-insoluble oil utilized should be sufficient to provide the desired oil film on the metal surfaces. Suitable amounts, which will vary over a wide range, can be empirically determined based upon the interior surface area dimensions of the metals to be protected in the automobile cooling system. In order to provide the desired oil film based upon various cooling system sizes, the alcohol-soluble/water-insoluble oil will typically be employed in an amount between about 0.01 and about 5 weight percent, preferably between about 0.1 and 3 weight percent based on the total weight of the concentrate. Below 0.01 weight percent, the alcohol-soluble/water-insoluble oil would not be expected to be functional, whereas above 5 weight percent, the amount would be too costly.

The alcohol employed in the composition of this invention preferably is at least one alcohol selected from the group consisting of methanol, ethanol, propanol, ethylene glycol, diethylene glycol, triethylene glycol, propylene glycol, and dipropylene glycol. However, other alcohols suitable for use as heat transfer fluids can be used such as, for example, butylene glycol, the monoacetate of glycerol, the monoethylether and dimethylether of glycerol, sorbitol, 1, 2- hexanediol, 1, 2, 6-hexanetriol, alkoxyalkanols (such as methoxyethanol), trimethylolpropanol, pentaerythritol, and hydroxy and alkoxy end-blocked polyalkylene oxides. The preferred alcohol is ethylene glycol, diethylene glycol, propylene glycol, dipropylene glycol and mixtures thereof owing to their availability and wide spread use.

As is apparent from the discussion herein, the selection of the alcohol-soluble/water-insoluble oil should be coordinated with that of the surface modifier compound. More specifically, to provide adequate corrosion resistance, the alcohol-soluble/water-insoluble oil selected should preferentially wet the surface-modified metal surface and essentially displace the alcohol-water medium of the working antifreeze on the surface-modified metal surface.

A buffer or mixture of buffers is optionally employed in the antifreeze concentrates and compositions of the present invention. The buffer can be employed in a wide range of amounts, but is preferably used in an amount of between about 0.1 and about 5 wt. percent based on the weight of the concentrate. A borate buffer useful in the composition concentrate of the present invention is conveniently added as the sodium tetraborate pentahydrate salt, which is commercially available. After adding the salt, addition of sodium hydroxide can be used to provide the desired mixture of metaborates and tetraborates in the concentrate.

Other compounds useful as buffers in the composition concentrate of the present invention include: phosphates, such as alkali metal phosphates; benzoates and substituted benzoates, such as alkali metal hydroxybenzoate; and, salts of dibasic acids having 6 to 12 carbons, such as sodium sebacate.

Among other functions, the buffer serves to provide the desired pH and reserve alkalinity (RA) during use. Preferably, the concentrate will have a pH of between about 5.5 and about 11 to provide a diluted antifreeze pH of between about 8 and about 11.

It should, of course, be appreciated that the working pH selected may affect the adherency of the surface modifier compound coating on the metal surfaces. The efficacy of the particular working pH in this regard may be readily ascertained.

Optional additives may be employed in minor amounts of less than 50 wt. percent based on the weight of the antifreeze composition concentrate. Typical optional additives would include, for example, known corrosion inhibitors for metals and include such additives as, for example, molybdates, phosphates, benzoates, sebacates, carbonates, silicone/silicates, hydroxybenzoates or acids thereof, alkali metal nitrates, alkali metal nitrites, tolyltriazole, mercaptobenzothiazole, benzotriazole, and the like, or mixtures thereof. If one or more of the known inhibitors are employed together with the inhibitors of the present invention, the sum total of all inhibitors should be used in an "inhibitory effective amount", i.e., an amount sufficient to provide some corrosion inhibition with respect to the aluminum or other metal surfaces to be protected. Other typical optional additives that may be used include wetting agents and surfactants such as, for example, known ionic and non-ionic surfactants such as the poly(oxyalkylene) adducts of fatty alcohols; antifoams and/of lubricants such as the well-known polysiloxanes and the oxyalkylene glycols. Indeed, any other minor ingredient known in the art that does not adversely affect the corrosion resistance sought to be achieved may be employed.

If desired, the antifreeze concentrate of this invention may be utilized in combination with other antifreeze concentrates. For example, the antifreeze concentrates of the present invention may be utilized with state-of-the-art antifreeze compositions. United States Patent 3,337,496 is representative of this type of technology.

However, the antifreeze concentrates of this invention, particularly of the consolute type, should afford adequate corrosion resistance in and of themselves. The stability and simplicity of the antifreeze concentrates of the present invention should likewise offer processing and handling advantages in comparison to state-of-the-art antifreeze concentrates.

As above noted, the instant antifreeze concentrate is admixed with water to form a working antifreeze for use in an automotive cooling system, wherein such provides inhibition of the corrosion of metal surfaces of the automotive cooling system by contacting such surfaces and coating such with a film of the alcohol-soluble/water-insoluble oil, thereby imparting a corrosion inhibiting property to such metal surfaces. The use of an antifreeze composition in automotive cooling systems is well known.

The following Examples are merely illustrative of, and not intended to limit the present invention.

## EXAMPLE 1

### A. Preparation of surface modifier plus alcohol-soluble/ water-insoluble oil antifreeze

This Example illustrates the preparation of several antifreeze concentrates of this invention utilizing various alcohol-soluble/water-insoluble oils and surface modifiers and tests the effectiveness with respect to heat rejecting aluminum surfaces.

A base fluid, having the composition set forth in Table I, was prepared.

TABLE I

| BASE FLUID COMPOSITION | |
|---|---|
| COMPONENT | WT. % |
| ethylene glycol | 96.4307 |
| sodium TTZ* (50% aq.) | 0.1165 |
| sodium nitrate (40% aq.) | 0.500 |
| sodium tetraborate pentahydrate | 1.962 |
| sodium hydroxide (50% aq.) | 0.9908 |
| Total wt % | 100.00 |

* sodium tolyltriazole

A surface modifier (0.1% of a polyethyleneoxy phosphate ester with an aromatic hydrophobe having a specific gravity of 1.11 at 25° C and sold by GAF Corporation under the trade designation ANTARA LE500) and an alcohol-soluble/water-insoluble oil (0.5% n-dodecanol) were added to the base fluid followed by brief stirring to insure that the ingredients were thoroughly mixed. In addition, comparative concentrate samples were prepared by adding either the surface modifier compound or the alcohol-soluble/water-insoluble oil to the base fluid.

The above concentrates were diluted to make a working antifreeze solution by mixing 33 wt. % of concentrate with 67 wt. % of "corrosive water" (deionized water containing 300 ppm. each of $SO_4^{=}$, $HCO_3^{-}$ and $Cl^{-}$, all added as the Na salts). The antifreeze concentrates were clear and bright in appearance.

B. Laboratory Disc Heat Flux Test: Method, Apparatus and Results

A test method used in the industry was employed to determine the corrosion inhibitory effect of the formulated composition of the present invention with respect to heat rejecting aluminum surfaces. This test method is described in Corrosion, 15, 257t at 258t (1959) "Laboratory Methods for Determining Corrosion Rates Under Heat Flux Conditions" and also in an ASTM publishion entitled, "Engine Coolant Testing: State of the Art," a symposium sponsored by ASTM Committee D-15, at pages 17-19 (Printed, May 1980), both incorporated herein by reference.

The following summarizes the test equipment and procedure used:

The apparatus consists of a 1 liter flask, fitted with a condenser, a thermometer, a cold finger, a temperature controller, a 1 1/2 inch diameter x 1/4 inch thick No. 319 aluminum casting alloy (herein "the aluminum disc"), and a soldering iron heat source.

The apparatus was charged with 900 ml. of the above-diluted test solution and heated to effect boiling at the aluminum disc surface and to maintain a solution temperature of about 80° C. The test duration was 168 hours. The weight loss of aluminum from the aluminum disc was determined and used as a measure of corrosion inhibitor effectiveness.

The results are set forth in Table II:

TABLE II

TABLE II (Aluminum Disk Test)

| Sample | Sample Description | Weight Loss (mg) |
|---|---|---|
| 1 | Base Fluid | 84 |
| 2 | Base Fluid<br>0.1 Wt. % SMC[1] | 66 |
| 3 | Base Fluid<br>0.5 wt. % oil[2] | 95 |
| 4 | Base Fluid<br>0.1 Wt. % SMC[1]<br>0.5 wt. % oil[2] | 27 |

[1] SMC ("Surface Modifier Compound") is ANTARA LE500 which is a polyethyleneoxy phosphate ester having an aromatic hydrophobe, having a specific gravity of 1.11 at 25° C and sold by GAF Corporation.

[2] Alcohol-soluble/water-insoluble oil is n-dodecanol.

The results as presented in Table II, above, generally show the alcohol-soluble/water-insoluble oil alone increases the corrosion of aluminum as compared to the base fluid alone as a control composition. The results likewise show the surface modifier alone provides some reduction in the corrosion of aluminum. The results of the experiments in Table II also demonstrate the surprising reduction in weight loss or improvement in corrosion inhibition resulting from the use of the alcohol-soluble/water-insoluble oil and the surface modifier compound.

EXAMPLE 2

The effectiveness of a surface modifier compound in modifying the metal surface to be treated with a alcohol-soluble/water-insoluble oil may be evaluated by first treating a metal surface with a selected surface modifier compound. A selected oil droplet is then placed on the modified metal surface and the contact angle measured using a Goniometer. A contact angle below about 90 degrees indicates that the oil forms a wetting film on the modified metal surface and that the surface modifier compound and oil can be effective in providing a corrosion inhibiting layer of oil to the metal surface.

A series of contact angle measurements were made using for convenience, a polypropylene glycol having a molecular weight of about 1000 as the oil. The contact angle measurement is made by placing the drop of polypropylene glycol on an aluminum surface submerged in a solution having 0.1 wt. percent of a selected surface modifier compound in an aqueous working antifreeze solution having 67% weight percent water, a reserve alkalinity of 50, in borate buffered glycol and having a selected pH of approximately 8. The measured contact angles were as follows:

| SURFACE MODIFIER | (CONTACT ANGLE) (At 5 Minutes) | |
|---|---|---|
| | Initial | 5 min |
| Control (no treatment) | 133° | 158° |
| 50-HB-170 phosphate[1] | 140° | 136° |
| 25-H-2000 phosphate[2] | 144° | 136° |
| GAFAC RB 400[3] | 138° | 82° |
| ANTARA LE 500[4] | 140° | 77° |
| LB 165 phosphate[5] | 131° | 84° |
| PV-4[6] | 131° | 84° |
| LB-1715 phosphate[7] | 114° | 51° |
| LG-56 phosphate[8] | 115° | 61° |

[1] 50-HB-170 phosphate is a phosphate ester of a butanol started 50/50 weight percent ethylene oxide/propylene oxide adduct to an SUS viscosity of 170 at 100° F.

[2] 25 H-2000 phosphate is a phosphate ester of a water started 25/75 weight percent ethylene oxide/propylene oxide adduct to an SUS viscosity of 2000 at 100° F.

[3] GAFAC RB 400 is an ethoxylated alkyl phosphate and available from GAF Corporation. "GAFAC" is the trademark of GAF Corporation.

[4] ANTARA LE 500 = a polyethyleneoxy phosphate ester having an aromatic hydrophobe and having a specific gravity of 1.11 at 25° C and available from GAF Corporation. "ANTARA" is the trademark of GAF Corporation.

[5] LB 165 phosphate is a phosphate ester of a butanol started 50/50 weight percent ethylene oxide/propylene oxide adduct to an SUS viscosity of 165 at 100° F.

[6] PV-4 is a polyether phosphate of a 20/80 weight percent ethylene oxide/propylene oxide adduct.

[7] LB-1715 phosphate is a phosphate ester of a butanol started propylene adduct to an SUS viscosity of 1715 at 100° F.

[8] LG-56 phosphate is a phosphate ester of a glycerin polyol and available from Union Carbide Corporation of Danbury, Connecticut.

Several additional surface modifiers were evaluated according to the above procedure to determine their use in wetting the surface of one or more metals commonly employed in automotive cooling systems. The contact angles for aluminum (Al) cast iron (Fe), steel; brass, ASTM solder (ASTM), copper (Cu) and Modine solder (Modine) were measured according to the procedure of this Example 2 using the following surface modifiers:

| | CONTACT ANGLES (At 5 Minutes) | | | | | | |
|---|---|---|---|---|---|---|---|
| SURFACE MODIFIER | Al | Fe | Steel | Brass | ASTM Solder | Cu | Modine Solder |
| $C_{15}$hydroxyalkanesulfonate | 145 | 108 | 160 | 57 | 150 | 58 | 120 |
| PO functional silane[1] | 139 | 90 | 65 | 63 | 138 | 27 | 138 |
| Amino function silane[2] | 153 | 98 | 81 | 142 | 75 | 147 | |
| 0.05% LG56 + 0.05% oleic acid[3] | 63 | 64 | 57 | 42 | 82 | 41 | 75 |
| 0.1% oleic acid | -[4] | | - | - | - | - | 51 |
| 0.05% oleic acid | - | - | - | - | - | - | 52 |
| 0.02% oleic acid | - | - | - | - | - | - | 68 |
| 0.05% lauric acid | - | - | - | - | - | - | 117 |

[1] $BUO(PO)_5C_3H_6$5 Si $(CH_3O)_3$; where "BUO" is butoxy.
[2] Amino propyl trimethoxy silane.
[3] LG56 is a phosphate ester of a glycerin started polyol sold by Union Carbide Corporation.
A "-" indicates that no measurement was made.

The above results demonstrate that suitable surface modifiers for one metal may not be suitable for a different metal. Accordingly, it may be advisable to employ two or more surface modifier compounds so as to provide the appropriate surface modification for each metal surface in the automotive cooling system. The selection of the modifier compound(s) is such that the modifier compound adheres to the metal surface and provides wetting for the oil. For example, the use of a surface modifier comprising LG56P and oleic acid was observed to advantageously provide a contact angle less than 90 degrees for each of the seven measures reported in the above table.

## EXAMPLE 3:

The contact angle measurement procedure of Example 2 was repeated using four antifreeze test compositions (A; B; C; and D) wherein the use of 2-dodecen-1-yl succinic anhydride ("DSA") was evaluated as a surface modifier compound at 0.3 weight percent in a 33 volume percent aqueous mixture. The four test compositions were prepared using the following three test fluids:

| TEST FLUID I | |
|---|---|
| Ethylene Glycol | 93.718 |
| Sebacic acid | 3.286 |
| NaOH, 50% | 2.484 |
| $Na_2B_4O_7\ 5H_2O$ | 0.0565 |
| $Na_2MoO_4\ 2H_2O$ | 0.200 |
| NaTTZ[1], 50% | 0.233 |
| | 100.0000 |

[1] sodium tolyltriazole

| TEST FLUID II | |
|---|---|
| Ethylene Glycol | 96.4307 |
| $Na_2B_4O_7$ $5H_2O$ | 1.9620 |
| NaOH, 50% | 0.9908 |
| NaTTZ[1], 50% | 0.1165 |
| $NaNO_3$, 40% | 0.5000 |
| | 100.0000 |

[1] sodium tolyltriazole

| TEST FLUID III | |
|---|---|
| Ethylene Glycol | 96.0504 |
| $Na_2B_4O_7$ $5H_2O$ | 1.9620 |
| NaOH, 50% | 0.8484 |
| NaSil - 40 clear[1] | 0.3663 |
| NaOH, 50% | 0.0564 |
| Y-5560[2] | 0.1000 |
| NaTTZ[3], 50% | 0.1165 |
| $NaNO_3$, 40% | 0.5000 |
| | 100.0000 |

[1] A liquid sodium silicate product of Diamond Shamrock Corporation having a solids content of 38.3 wt. % and manufactured for uses requiring high clarity.
[2] A silicone stabilizer disclosed in U.S. Patent Nos. 3,337,496 and 3,341,469 and having the formula: $CH_3O(CH_2CH_2O)_mC_3H_6Si(O\text{-}CH_3)_3$ where m has an average value of 7.2.
[3] Sodium tolyltriazole

The four tests were carried out using the following compositions:

TEST COMPOSITION A: Test Fluid I with 0.3 weight percent DSA diluted to a 33 volume percent solution with a buffered pH of 7.8 to 8.3.

TEST COMPOSITION B: Equal parts of Test Fluid I and Test Fluid II with 0.3 weight percent DSA diluted to a 33 volume percent solution with a buffered pH of 7.8 to 8.3.

TEST COMPOSITION C: Equal parts of Test Fluid I and Test Fluid III with 0.3 weight percent DSA diluted to a 33 volume percent solution with a buffered pH of 7.8 to 8.3.

TEST COMPOSITION D: Test Fluid I diluted to a 33 volume percent solution with a buffered pH of 7.8 to 8.3.

The above test compositions were evaluated by contact angle according to the procedure described in Example 2 for measuring each metal surface. The measured contact angles are graphically depicted in the Figure. As shown in the Figure, the use of DSA in the antifreeze composition as a surface modifier compound provided an improvement in formation of an oil film on the metal surfaces as evidenced by the lowering of the measured contact angles. Further, in many instances the contact angle was below 90°. A comparison of Test Compositions A, B and C with Test Composition D (no surface modifier) as to the measured contact angles shows that there has been a decrease in the measured contact angles when the surface modifier compound is present. This decrease in the contact angle demonstrates the significant benefits obtained when a surface modifier for the metals is present in an automotive cooling system. The lower measured contact angle indicates an improvement in the formation of the oil film on the surface modified metal surface and an implied improvement in the corrosion-inhibiting effect of the antifreeze composition. As noted from the above Test Compositions, the presence of a silicate (as an addition

corrosion-inhibiting component) in Test Compositions I and III did not interfere with the improvement (lowering) in the contact angle achieved by addition of the surface modifier compound.

## Claims

1. An antifreeze concentrate comprising:

(a) an alcohol:

(b) at least one alcohol-soluble/water-insoluble oil present in a corrosion-inhibiting amount characterized as having a solubility of at least about 0.4 wt % in said alcohol at 25° C at 1 atm pressure and a solubility of less than about 1.0 wt % in a mixture of 50 wt. percent water and 50 wt. percent alcohol at 25° C at 1 atm pressure: and

(c) at least one surface modifier compound selected from the group consisting of organic derivatives of the following: phosphate, sulfate, phosphonate, sulfonate, carboxylate, organoammonium and phosphonium salts, amine oxides, amphoteric and zwitterionic groups and mixtures thereof; wherein the organic group is selected from the class consisting of the following radicals: alkyl, aryl, alkylaryl, arylalkyl, alkyleneoxy, polyalkyleneoxy, and combinations thereof.

2. An antifreeze concentrate according to claim 1 wherein said alcohol-soluble/water-insoluble oil is characterized as having a solubility of at least about 1.0 wt % in said alcohol at 25° C at 1 atm pressure and a solubility of less than about 0.25 wt % in a mixture of 50 wt % water and 50 wt % alcohol at 25° C at 1 atm pressure.

3. An antifreeze concentrate according to claim 1 wherein said alcohol-soluble/water-insoluble oil is selected from the group consisting of n-hexanol, n-octanol, n-decyl alcohol, n-dodecyl alcohol, toluene, n-heptane alcohol, 2-octanone, 2-methyl cyclohexanone. 2-t-butyl cyclohexanol, 4-t-butyl cyclohexanol, 2-methyl cyclohexanol, 4-methyl cyclohexanol, o-methyl benzyl alcohol, p-methyl benzyl alcohol, p-ethyl benzyl alcohol, p-t-butyl benzyl alcohol, m-chlorobenzyl alcohol, m-chloroacetophenone, 2-chloracyclohexanol, 2-chloro-2-butanone and mixtures thereof.

4. An antifreeze concentrate according to claim 1 wherein said surface modifier compound is an organophosphate identified by the structural formula:

$$R_1-O-\underset{O-R_2}{\underset{|}{\overset{\overset{O}{\|}}{P}}}-O-R_3$$

wherein each substituent $R_1$, $R_2$, and $R_3$ are selected from the class consisting of the following radicals: hydrogen; alkyl, aryl, alkenyl and alkynyl, with each of the foregoing having up to about 24 carbon atoms; alkyleneoxy, polyalkyleneoxy; phosphates, polyphosphates and their salts, and combinations thereof; with the proviso that at least one of said substituents is an organic radical listed above or combinations thereof.

5. An antifreeze concentrate according to claim 1 wherein said surface modifier compound is an organophosphate selected from the group identified by the following structural formulae (I) through (III):

$$\text{(I)} \qquad R'_k\overset{\overset{O}{\|}}{P}\ (OH)_{3-k}$$

$$\text{(II)} \qquad R'[\underset{OH}{\underset{|}{\overset{\overset{O}{\|}}{P}}}-O-(PO)_w(EO)_z]_n\underset{OH}{\underset{|}{\overset{\overset{O}{\|}}{P}}}-R'$$

$$\text{(III)} \qquad R'\underset{OH}{\underset{|}{\overset{\overset{O}{\|}}{P}}}-O-[\underset{OH}{\underset{|}{\overset{\overset{O}{\|}}{P}}}-O]_mH$$

wherein R′ = [RO(PO)$_x$(EO)$_y$] wherein R = H or alkyl, aryl, alkylaryl or arylalkyl alkenyl or alkynyl having up to 24 carbon atoms
PO = Propylene oxide radical
EO = Ethylene oxide radical
x = 1 to 100
y = 0 to 50
k = 1 to 3, with the provisio that when k can be 3, at least one R′ group is removed from the phosphate ester by hydrolysis prior to or during use
n = 1 to 100
w = 0 to 100, with the proviso that when w ≦ 1, then x can be zero
z = 0 to 50
m = 1 to 10

6. An antifreeze concentrate according to claim 1 additionally containing a buffer to provide a concentrate pH of between about 5.5 and about 11.

7. An antifreeze concentrate according to claim 1 which additionally contains silicate or a silicone/silicate polymer in a corrosion-inhibiting effective amount.

8. An antifreeze concentrate according to claim 1 wherein: said alcohol is ethylene glycol; said surface modifier compound is a phosphate; and said alcohol-soluble/water-insoluble oil is selected from the group consisting of n-hexanol, n-octanol, n-decyl alcohol, n-dodecyl alcohol, toluene, n-heptane, 2-octanone, 2-methyl cyclohexanone, 2-t-butyl cyclohexanol, 4-t-butyl cyclohexanol, 2-methyl cyclohexanol, 4-methyl cyclohexanol, o-methyl benzyl alcohol, p-methyl benzyl alcohol, p-ethyl benzyl alcohol, p-t-butyl benzyl alcohol, m-chlorobenzyl alcohol, m-chloroacetophenone, 2-chloracyclohexanol, 2-chloro-2-butanone and mixtures thereof.

9. An antifreeze concentrate according to claim 1 or claim 2 or claim 4 or claim 7 wherein the amount of component (c) is present in an amount of between about 0.001 and about 30 weight percent based on the total weight of the concentrate.

10. An antifreeze concentrate according to claim 1 or claim 2 or claim 4 or claim7 wherein the amount of component (c) is present in an amount of between about 0.005 and about 1 weight percent based on the total weight of the concentrate.

11. An antifreeze concentrate according to claim 1 or claim 2 or claim 4 or claim 7 wherein the amount of component (c) is present in an amount of between about 0.005 and about 0.1 weight percent based on the total weight of the concentrate.

12. An antifreeze concentrate according to claim 1 or claim 2 or claim 4 or claim 7 wherein component (b) is present in an amount of between about 0.01 and about 5 weight percent based on the total weight of the concentrate.

13. An antifreeze concentrate according to claim 1 or claim 2 or claim 4 or claim 7 wherein component (b) is present in an amount of between about 0.1 and about 3 weight based on the total weight of the concentrate.

14. An antifreeze concentrate according to claim 1 or claim 2 or claim 4 or claim 7 wherein said alcohol is ethylene glycol, diethylene glycol, propylene glycol, dipropylene glycol, or mixtures thereof.

15. An antifreeze composition comprising the antifreeze concentrate of claim 1 and additionally containing water in an amount sufficient to make a working antifreeze containing between about 10 wt % and about 90 wt % water.

16. An antifreeze composition according to claim 15 wherein said alcohol-soluble/water-insoluble oil is characterized as having a solubility of at least about 1.0 wt % in said alcohol at 25°C at 1 atm pressure and a solubility of less than about 0.05 wt % in a mixture of 50 wt % water and 50 wt % alcohol at 25°C at 1 atm pressure.

17. An antifreeze composition according to claim 1 wherein said alcohol-soluble/water-insoluble oil is selected from the group consisting of n-hexanol, n-octanol, n-decyl alcohol, n-dodecyl alcohol, toluene, n-heptane alcohol, 2-octanone, 2-methyl cyclohexanone, 2-t-butyl cyclohexanol, 4-t-butyl cyclohexanol, 2-methyl cyclohexanol, 4-methyl cyclohexanol, o-methyl benzyl alcohol, p-methyl benzyl alcohol, p-ethyl benzyl alcohol, p-t-butyl benzyl alcohol, m-chlorobenzyl alcohol, m-chloroacetophenone, 2-chloracyclohexanol, 2-chloro-2-butanone and mixtures thereof.

18. An antifreeze composition according to claim 15 wherein said surface modifier compound is an organophosphate identified by the structural formula:

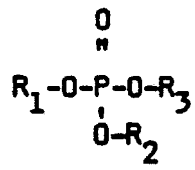

wherein each substituent $R_1$, $R_2$, and $R_3$ are selected from the class consisting of the following radicals: hydrogen; alkyl, aryl, alkenyl and alkynyl, with each of the foregoing having up to about 24 carbon atoms; alkyleneoxy, polyalkyleneoxy; phosphates, polyphosphates and their salts, and combinations thereof; with the proviso that at least one of said substituents is an organic radical listed above or combinations thereof.

19. An antifreeze composition according to claim 15 wherein said surface modifier compound is an organophosphate selected from the group identified by the following structural formulae (I) through (III):

(I) 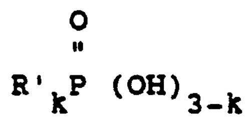

(II) 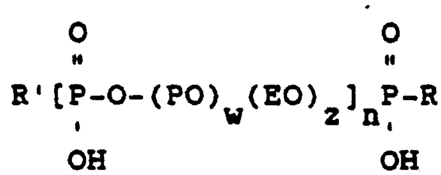

(III) 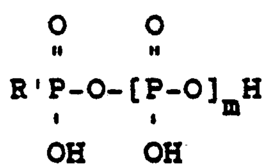

wherein $R' = [RO(PO)_x(EO)_y]$ wherein R = H or alkyl, aryl, alkylaryl or arylalkyl alkenyl or alkynyl having up to 24 carbon atoms

PO = Propylene oxide radical

EO = Ethylene oxide radical

x = 1 to 100

y = 0 to 50

k = 1 to 3, with the provisio that when k can be 3, at least one $R'$ group is removed from the phosphate ester by hydrolysis prior to or during use

n = 1 to 100

w = 0 to 100, with the proviso that when w $\leq$ 1, then x can be zero

z = 0 to 50

m = 1 to 10

20. An antifreeze composition according to claim 15 wherein the antifreeze concentrate additionally contains a buffer to provide an antifreeze concentrate pH of between about 5.5 and about 11.

21. An antifreeze composition according to claim 15 wherein the antifreeze concentrate additionally contains silicate or a silicone/silicate polymer in a corrosion-inhibiting effective amount.

22. An antifreeze composition according to claim 15 or claim 16 or claim 18 or claim 21 wherein the amount of component (c) in said antifreeze concentrate is present in an amount of between about 0.001 and about 30 weight percent based on the total weight of the antifreeze concentrate.

23. An antifreeze composition according to claim 22 wherein the amount of component (c) in the antifreeze concentrate is present in an amount of between about 0.005 and about 1 weight percent based on the total weight of the antifreeze concentrate.

24. An antifreeze composition according to claim 22 wherein component (b) in the antifreeze concentrate is present in an amount of between about 0.01 and about 5 weight percent based on the total weight of the antifreeze concentrate.

25. An antifreeze composition according to claim 24 wherein component (b) in the antifreeze concentrate is present in an amount of between about 0.1 and about 3 weight percent based on the total weight of the antifreeze concentrate.

26. An antifreeze composition according to claim 15 or claim 16 or claim 18 or claim 21 wherein said alcohol is ethylene glycol, diethylene glycol, propylene glycol, dipropylene glycol, or mixtures thereof.

27. A method of inhibiting the corrosion of metal surfaces of an automotive cooling system comprising contacting the metal surfaces of an operating automotive cooling system with the antifreeze composition of claim 15.

28. A method according to claim 27 wherein said metal surfaces are coated with a alcohol-soluble/water insoluble oil film, thereby imparting a corrosion inhibiting property to said metal surfaces.

29. A method according to claim 27 wherein the antifreeze composition concentrate comprises:

(a) an alcohol;

(b) at least one alcohol-soluble/ water-insoluble oil present in a corrosion-inhibiting amount characterized as having a solubility of at least about 0.4 wt % in said alcohol at 25° C at 1 atm pressure and a solubility of less than about 1.0 wt % in a mixture of 50 wt. percent water and 50 wt. percent alcohol at 25° C at 1 atm pressure: and

(c) at least one surface modifier compound selected from the group consisting of organic derivatives of the following: phosphate, sulfate, phosphonate, sulfonate, carboxylate, organoammonium and phosphonium salts, amine oxides, and mixtures thereof; wherein the organic group is selected from the class consisting of the following radicals: alkyl, aryl, alkylaryl, arylalkyl, alkyleneoxy, polyalkyleneoxy, and combinations thereof, present in an amount sufficient to provide surface modification of a metal surface contacted by the antifreeze composition: and

(d) between about 10 percent by weight and about 90 percent by weight water.

30. The method according to claim 29 wherein said alcohol-soluble/water-insoluble oil is characterized as having a solubility of at least about 1.0 wt % in said alcohol at 25° C at 1 atm pressure and a solubility of less than about 0.05 wt % in a mixture of 50 wt % water and 50 wt % alcohol at 25° C at 1 atm pressure.

31. A method according to claim 29 wherein said surface modifier compound is an organophosphate identified by the structural formula:

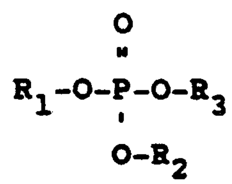

wherein each substituent $R_1$, $R_2$, and $R_3$ are selected from the class consisting of the following radicals: hydrogen; alkyl, aryl, alkenyl and alkynyl, with each of the foregoing having up to about 24 carbon atoms; alkyleneoxy, polyalkyleneoxy; phosphates, polyphosphates and their salts, and combinations thereof; with the proviso that at least one of said substituents is an organic radical listed above or combinations thereof.

32. A method according to claim 29 wherein said antifreeze composition additionally contains a buffer to provide a pH of between about 8 and about 11.

33. A method according to claim 29 wherein said antifreeze composition additionally contains silicate or a silicone/silicate polymer in a corrosion-inhibiting effective amount.

34. A method according to claim 29 wherein the amount of component (c) is present in an amount of between about 0.001 and about 30 weight percent based on the total weight of the antifreeze composition.

35. A method according to claim 29 wherein component (b) is present in an amount of between about 0.01 and about 5 weight percent based on the total weight of the antifreeze composition.

36. A method according to claim 29 wherein said alcohol is ethylene glycol, diethylene glycol, propylene glycol, dipropylene glycol, or mixtures thereof.

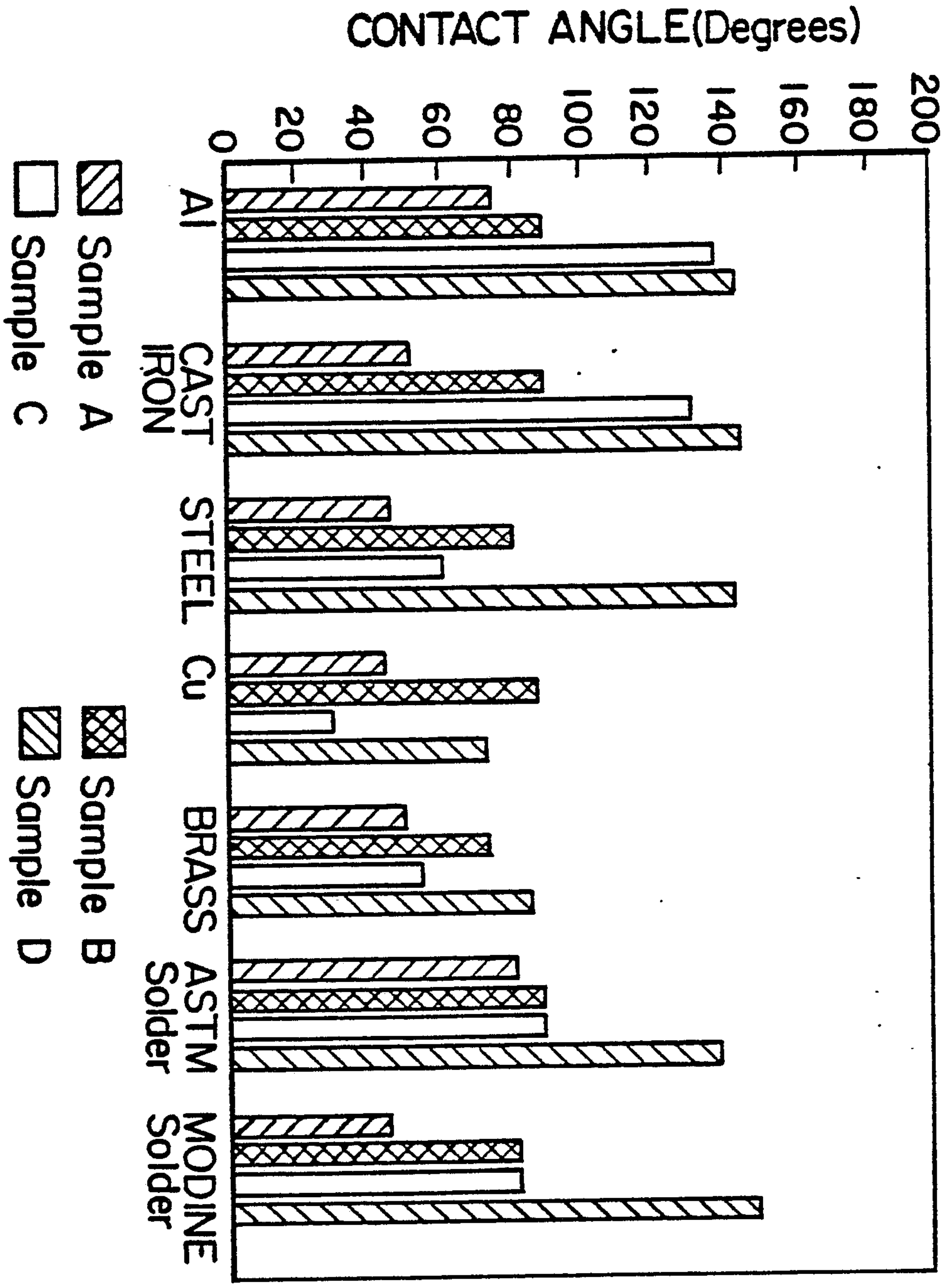
CONTACT ANGLE(Degrees)
0
20
40
60
80
100
120
140
160
180
200
Al
CAST IRON
STEEL
Cu
BRASS
ASTM Solder
MODINE Solder
Sample A
Sample B
Sample C
Sample D

European Patent Office

# EUROPEAN SEARCH REPORT

Application Number

EP 90 85 0042

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 600 919 (UNION CARBIDE)<br>* Page 4, lines 15-31; page 5, lines 1-17; example 1; claims 1,5,6,11 * | 1,4,17, 18,28, 31 | C 09 K 5/00 |
| X | WO-A-8 600 918 (UNION CARBIDE)<br>* Page 5, lines 16-31; page 6, line 1-25; page 9, lines 15-27; page 10, lines 23-27; page 11, lines 1-26; claims 1,2,3 * | 1,4,5, 17-19, 31 | |
| A | US-A-4 687 590 (HAAK)<br>* Column 2, lines 60-68; column 3, lines 1-61; claims 1,11,12 * | 1,4,5 | |
| A | US-A-4 704 220 (GODDARD et al.)<br>* Column 2, lines 43-68; column 3, lines 1-24; claims 1-10 * | 1,4 | |
| A | EP-A-0 059 461 (BASF WYANDOTTE)<br>* Claims 1,5 * | 1,4,5 | |
| | | | TECHNICAL FIELDS SEARCHED (Int. Cl.5) |
| | | | C 09 K |

The present search report has been drawn up for all claims

| Place of search | Date of completion of the search | Examiner |
|---|---|---|
| THE HAGUE | 23-04-1990 | LEDER M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document